Europäisches Patentamt

(19) European Patent Office

Office européen des brevets

(11) Numéro de publication: **0 087 550**
**A2**

(12) **DEMANDE DE BREVET EUROPEEN**

(21) Numéro de dépôt: **82830291.9**

(51) Int. Cl.³: **A 47 J 31/40**

(22) Date de dépôt: **29.11.82**

(30) Priorité: **30.11.81 IT 957581**
**18.12.81 IT 959181**
**18.12.81 IT 1191281 U**
**18.12.81 IT 959281**
**18.12.81 IT 1191381 U**

(43) Date de publication de la demande:
**07.09.83 Bulletin 83/36**

(84) Etats contractants désignés:
**AT BE CH DE FR GB IT LI LU NL SE**

(71) Demandeur: **Baecchi, Alfredo**
**Via Molino Cellai 152**
**I-50010 Troghi Firenze(IT)**

(72) Inventeur: **Baecchi, Alfredo**
**Via Molino Cellai 152**
**I-50010 Troghi Firenze(IT)**

(74) Mandataire: **Martini, Lazzaro**
**Ufficio Brevetti Ing. Lazzaro Martini Via Brunelleschi, 1**
**I-50123 Firenze(IT)**

(54) Groupe de débit de distributeur de boissons chaudes à cartouches préconfectionnées à jeter.

㊵ Pour produire des boissons chaudes de percolation ou de solution, on utilise un groupe de débit comprenant un bâti (4) avec une chambre cylindrique (41) à axe vertical et ouverte dans le haut; un cylindre (7) tubulaire, mobile verticalement et commandé manuellement, placé dans la chambre (41) et en sortant pour chemiser entièrement la cartouche (11); un godet (15) plan-conique, fixé au bâti (4) dans le cylindre (7) susdit pour supporter la cartouche (11) pendant le fonctionnement, recueillir la boisson produite et l'amener au bec de distribution (14); une tête (13) horizontale, fixe, située axialement au-dessus du godet (15) pour débiter l'eau sous pression, chaude ou froide, sur la cartouche (11).

Pour des boissons de percolation, on utilise une cartouche en plastique constituée par une enveloppe (110) tubulaire, avec un diaphragme (112) transversal, pluriperforé, rendu inférieurement rigide par plusieurs cloisons (115) radiales, longitudinales et allant jusqu'à l'enveloppe (110), et un couvercle (126) pluriperforé.

Pour des boissons de solution, on utilise une cartouche en plastique constituée par une enveloppe cylindrique (210) avec le fond (212) muni d'une étroite fente (213) passante et centrale, et un couvercle (216) muni de nervures (215) radiales et avec deux petits trous (214) passants et espacés entre eux. Le couvercle de chaque cartouche a une bride (119-219) munie d'une rainure (120-220) annulaire permettant à la partie restante extérieure de la bride de produire, sous l'action de la faible compression exercée par le bord (71) du cylindre (7) au cours de la manoeuvre manuelle, l'étanchéité avec la tête (13).

Fig. 3

Fig. 11

Groupe de débit de distributeur de boissons chaudes à cartouches préconfectionnées à jeter.

L'invention concerne un groupe de débit pour distributeur de boissons chaudes, en particulier de café express, utilisant des cartouches préconfectionnées à jeter.

Tout le monde connaît les distributeurs de boissons, chaudes ou froides, utilisant des cartouches cylindriques, en lame de métal ou de matière plastique, préconfectionnées avec des produits lyophilisés ou solubles comme du café, thé, lait, chocolat, bouillon ou autre. Etant donnée la solubilité du produit contenu dans les cartouches, ces machines utilisent de l'eau à basse pression et température moyenne de sorte que le groupe de débit est constitué par une platine supérieure à fond pluriperforé pour le débit de l'eau, une plaque inférieure pluriperforée de support de la cartouche et un piston creux et concentrique à la

- 2 -

0087550

.plaque et à la cartouche de recueil de la solution: le bord supérieur du piston serre la bride dépassant de la cartouche contre le joint é-annulaire élastique de la platine de débit et en provoque son étanchéité hydraulique. La cartouche est tout simplement maintenue entre la platine de débit et la plaque, alors que sa paroi latérale est libre et détachée de celle du piston d'étanchéité.

Tout le monde sait que les boissons, en particulier le café, obtenues à partir de produits lyophilisés n'ont pas les mêmes propriétés organoleptiques que celles des produits frais et en conséquence, celles-ci sont peu appréciées du public. On obtient de meilleurs résultats par percolation mais dans ce cas, la couche de café moulu doit être compacte et requiert donc l'utilisation d'eau à pression et température élevées.

On connaît également le distributeur de café express utilisant des cartouches préconfectionnées avec une couche de café moulu et tassé. Cette machine comprend un groupe de débit constitué par un piston supérieur de débit de l'eau, coulissant verticalement, par une plaque inférieure fixe, de support de la cartouche et de recueil du mélange, et par une pince à deux mâchoires curvilignes, dont la course est horizontale, servant à serrer la cartouche: l'étanchéité hydraulique est confiée à la bride de la cartouche qui est comprimée par le piston de débit de l'eau. Cette machine présente toutefois différents inconvénients: fui- te d'eau du piston de débit et donc besoin fréquent de recourir au service après-vente pour changer les joints; résidus calcaires sur les parois de la chambre dans laquelle se déplace le piston et contribuant à l'usure des joints susdits; formation d'une voie d'eau dans la couche de café près de la paroi de la cartouche en face de la zone laissée libre par les mâchoires et donc, utilisation incomplète de cette couche; danger de rupture de la cartouche avec une pression de l'eau supérieure à 10 atmosphères car tout le pourtour de la cartouche n'est pas serré dans les mâchoires.

La présente invention a pour but principal de proposer un groupe de débit pour distributeur de café express à cartouches préconfectionnées, en particulier par percolation, éliminant tous ces inconvénients.

L'invention résoud le problème consistant à rendre les cartouches en plastique préconfectionnées capables de résister aux pressions et températures de fonctionnement élevées, nécessaires pour obtenir la percolation de la couche de café; cette invention résoud également le problème consistant à ce que les capsules réalisent elles-mêmes et de façon autonome, la parfaite étanchéité avec la tête de débit de l'eau.

Nous avons atteint ce résultat selon l'invention en adoptant l'idée de chemiser toute la cartouche, placée entre une tête de débit de l'eau et un godet plan-concave de recueil du café express, avec une chemise cylindrique en métal, faite d'une seule pièce et bien adhérant à toute la surface latérale de la cartouche; d'également munir la cartouche de plusieurs cloisons longitudinales, radiales et situées au-dessous du diaphragme de filtrage, et d'une bride avec une bague périphérique facilement déformable radialement pour être immédiatement écrasée, entre la tête de débit de l'eau et la chemise, à la suite d'une manoeuvre manuelle effectuée avec un effort minime.

Les avantages obtenus grâce à cette invention consistent essentiellement en ce que l'on peut utiliser des pressions de fonctionnement élevées (supérieures à 10 atm.) et obtenir ainsi la complète percolation de la couche de café; la tête de débit de l'eau ne comporte pas de fuites; l'étanchéité hydraulique avec la cartouche est obtenue sans aucun joint fourni avec la machine, éliminant ainsi tout type d'entretien ; l'étanchéité susdite est obtenue par manoeuvre manuelle requérant un effort minime de la part de l'utilisateur; l'épaisseur de la cartouche est inférieure à celle des cartouches en plastique actuellement employées; l'on peut utiliser aussi bien des cartouches pour percolation que des cartouches pour solution; le fonctionnement a une fiabilité élevée, constante et garantie pour de nombreuses années.

Dans ce qui suit, l'invention est exposée plus en détail à l'aide des dessins en annexe représentant seulement un mode d'exécution possible avec une variante.

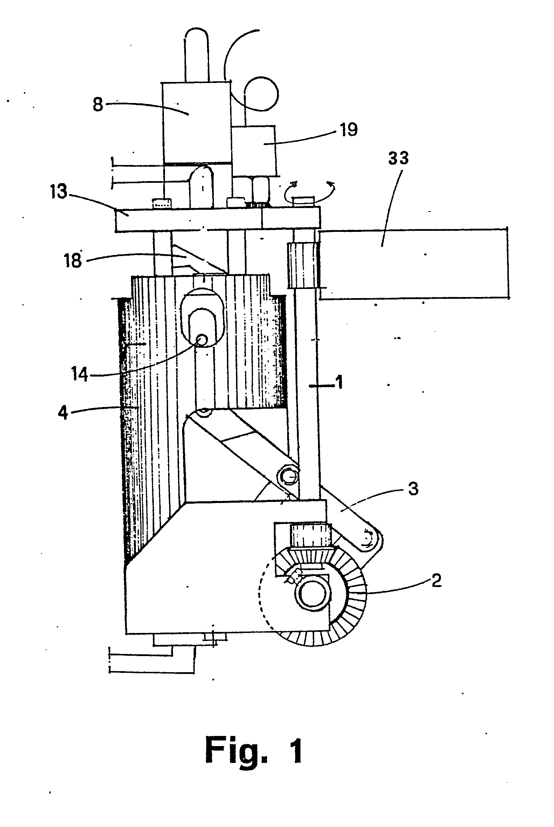

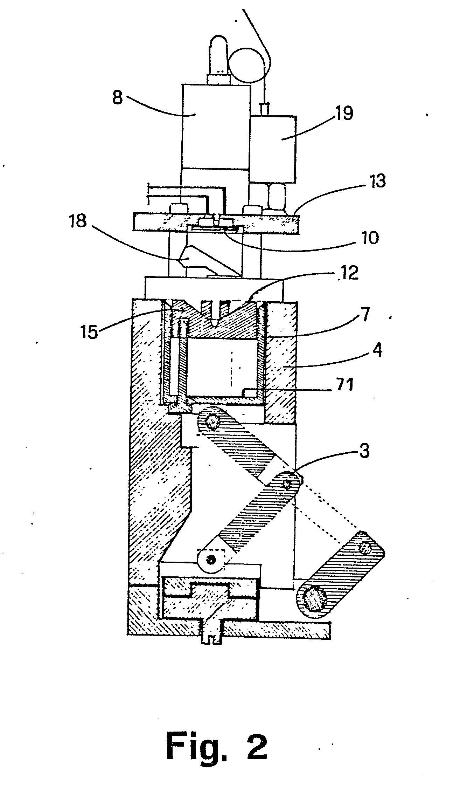

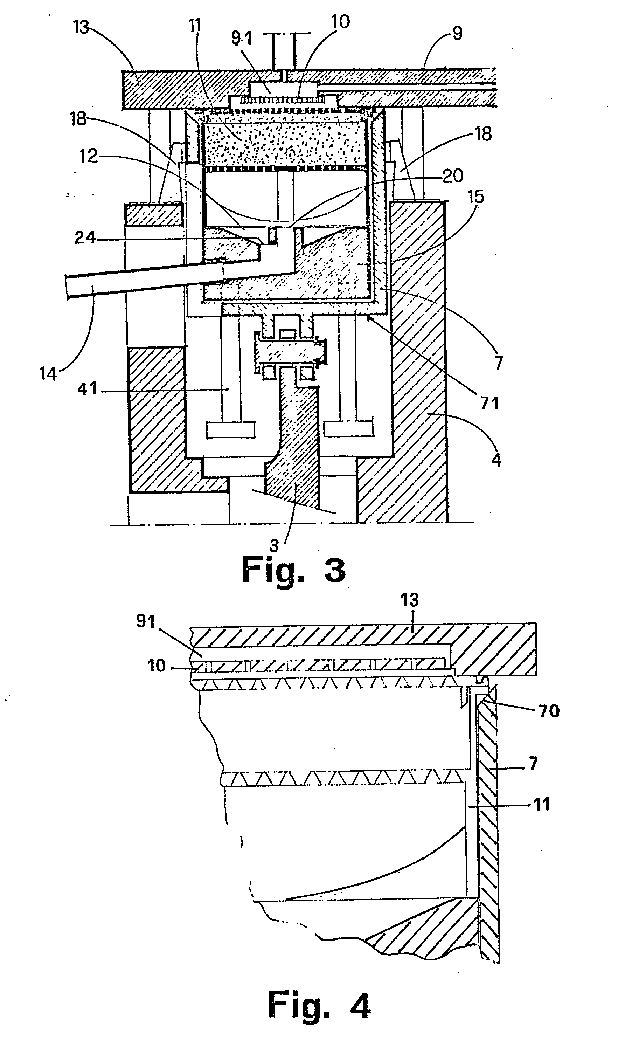

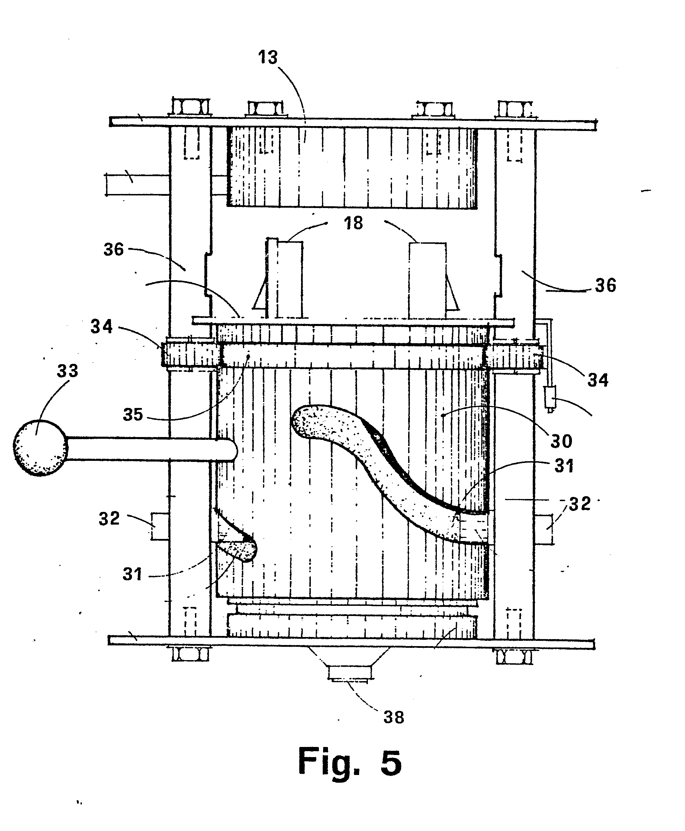

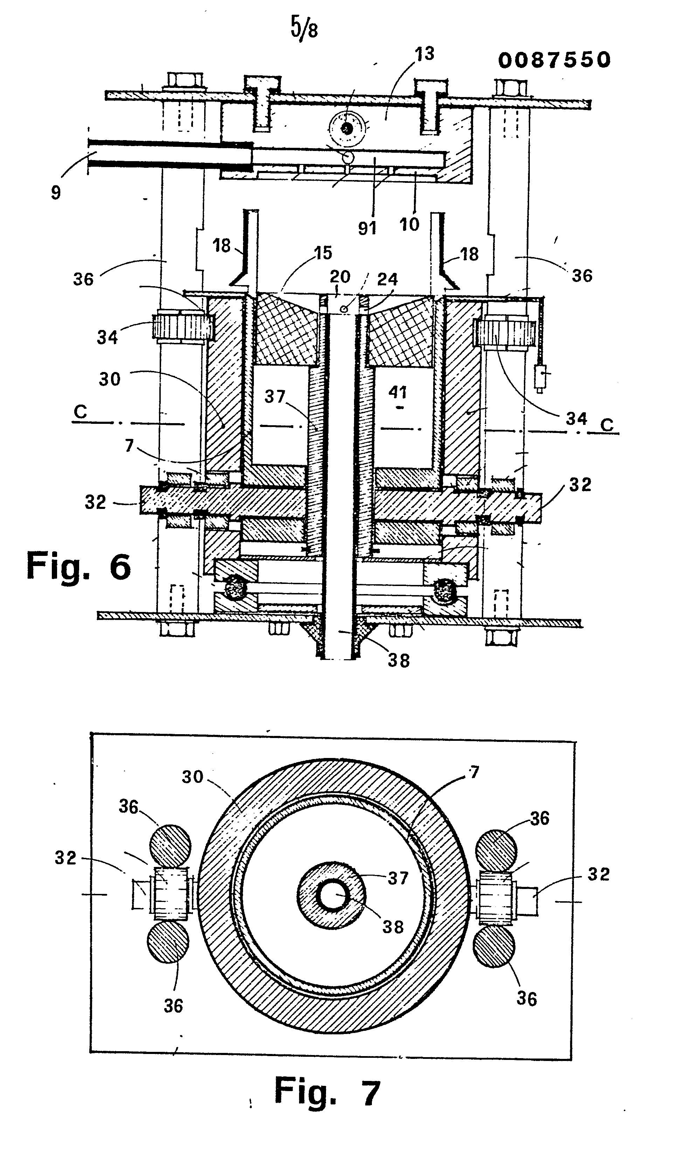

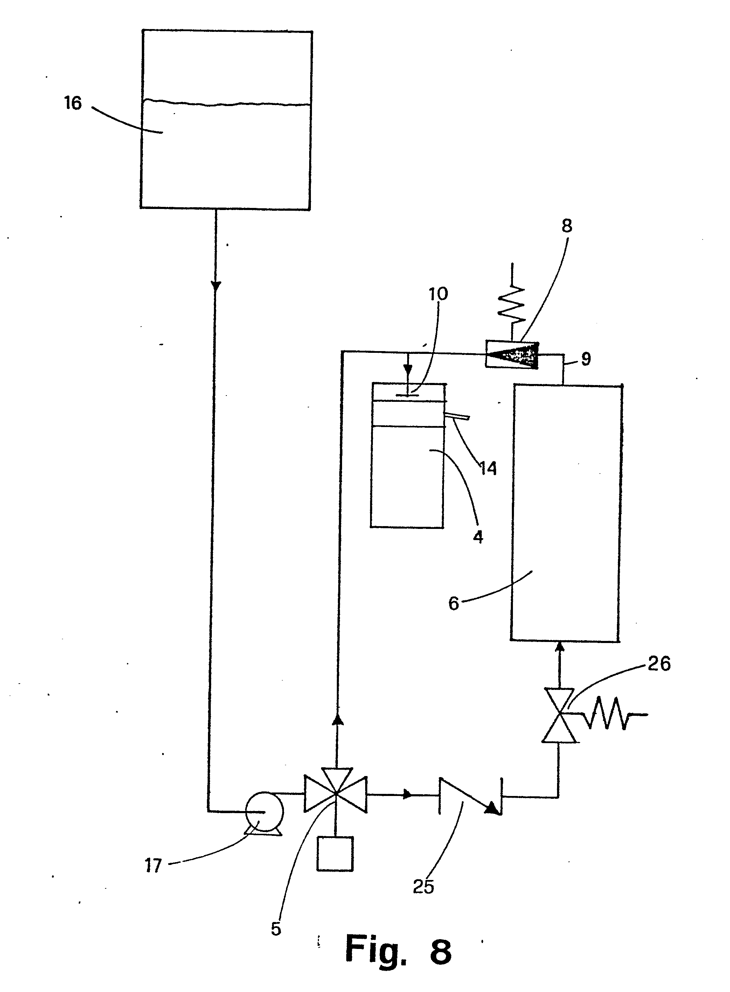

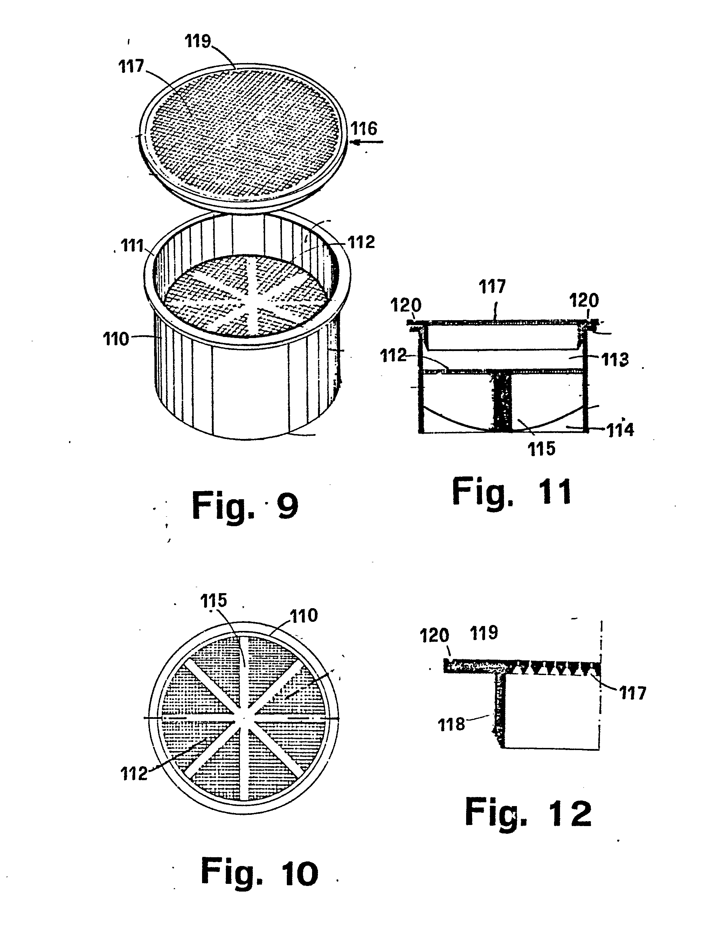

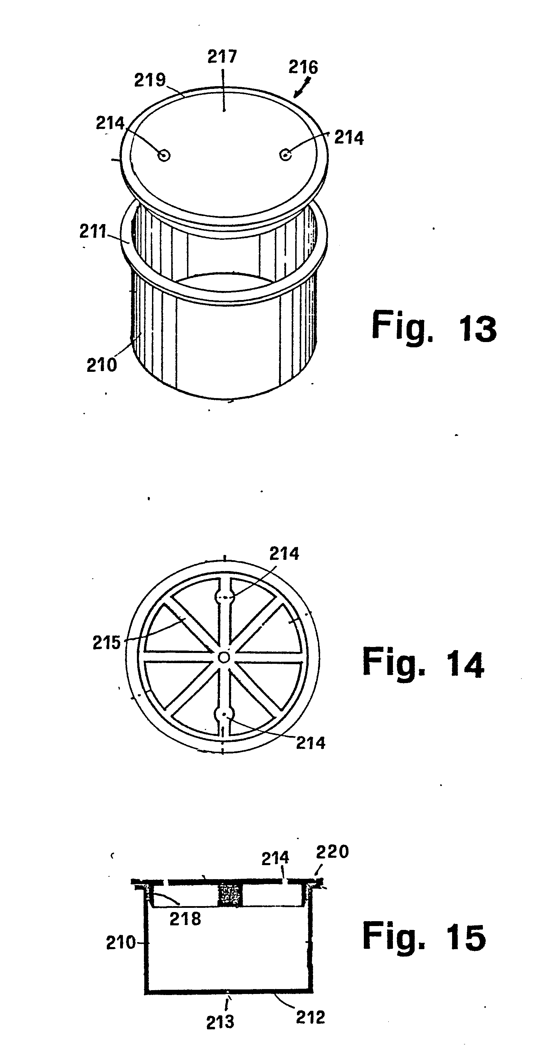

La figure 1 est la vue d'ensemble frontale d'un groupe de débit selon l'invention, sans cartouches; la figure 2 est la coupe verticale diamétrale du groupe de la figure 1; la figure 3 représente, en coupe verticale, un détail agrandi du groupe de débit de la figure 2, avec la cartouche en position de percolation; la figure 4 représente, en coupe verticale, un détail ultérieurement agrandi de la zone rendue étanche par la cartouche, avant que sa bride n'ait été écrasée; la figure 5 est la vue d'ensemble frontale d'une variante du groupe de débit selon l'invention; la figure 6 est la coupe verticale diamétrale du groupe de la figure 5; la figure 7 est la coupe selon la ligne CC de la figure 6; la figure 8 représente le schéma hydraulique connexe au groupe selon l'invention pour deux températures différentes de l'eau; la figure 9 est une vue axonométrique éclatée d'une cartouche en plastique pour la percolation du café selon l'invention; la figure 10 est la vue d'en bas de la cartouche de la figure 9; la figure 11 est la coupe verticale diamétrale de la cartouche de la figure 9 avec le couvercle posé; la figure 12 représente un détail agrandi du couvercle de la cartouche de la figure 9; la figure 13 est la vue axonométrique éclatée d'une cartouche en plastique pour une solution de café ou produits similaires lyophilisés, selon l'invention; la figure 14 est la vue d'en bas du couvercle de la cartouche de la figure 13; la figure 15 est la coupe verticale diamétrale de la cartouche de la figure 13 avec le couvercle posé.

Par référence aux figures de 1 à 4 des dessins en annexe, un groupe de débit pour distributeur de café express avec des cartouches préconfectionnées à jeter, selon l'invention, comprend:
- un bâti (4) avec une chambre (41) cylindrique, verticale, ouverte dans le haut;
- un cylindre creux (7) chemisant la cartouche, placé dans la chambre (41) du bâti (4) et dont le fond (71) est relié à une genouillère (3), à son tour asservie, par l'intermédiaire de roues dentées (2), à une tige (1) munie d'une poignée (33) de commande, dont la rotation horizontale dans les deux sens provoque la course, respectivement de montée ou de descente, du cylindre (7) dans la chambre (41); le bord (71) du cylindre (7) est incliné vers l'intérieur afin de permettre, pendant la phase de percolation, à la bride de la cartouche (11) de bien y adhérer pendant sa déformation résultant de son écrasement;
- un godet (15) fixé par plusieurs vis (4) dans le cylindre (7) et avec la base supérieure plan-conique: sa partie plane permet de réaliser un support coplanaire à la base supérieure du bâti (4) pour une cartouche (11) du type pour percolation ou solution, et la partie conique permet de recueillir le café filtré de la cartouche (11) qui, sortant par (12) s'écoule par un bec (14); ce godet (15) est aussi muni d'un canal axial (20) en élévation afin de recueillir la solution sortant d'une cartouche pour solution et donc, de garder séparées les deux boissons, de percolation et de solution;

- deux ressorts (18) situés autour de l'orifice de la chambre (41), articulés au sommet du bâti (4) et dont la course totale horizontale permet

de centrer correctement la cartouche (11) sur le godet (15);

- une tête (13) horizontale, fixée sur le bâti(4), alimentée par un canal (9) d'amenée de l'eau chaude, avec un orifice (91) de débit, concentriquement au-dessus de la chambre (41) et munie d'un brise-jet (10).

En alternative au groupe de débit décrit ci-dessus et par référence aux figures de 5 à 7 des dessins en annexe, le cylindre chemisant (7) est asservi à une came tubulaire (30) placée sur ce cylindre (7) et munie de deux boutonnières (31) diamétralement opposées où passent deux brides horizontales (32) solidaires du cylindre (7): un levier (33) commande la rotation, dans un sens ou dans l'autre, de la came (30) qui reste horizontale, grâce à la prise des coussinets en bronze (32) dans la gorge horizontale (35) alors que les brides (32) guidées entre les montants verticaux (36) montent ou descendent respectivement. De plus, le godet (15) est supporté par un élément vertical, central (37), tubulaire, passant dans le fond du cylindre (7) susdit et dont le canal (38) permet à la boisson de s'écouler.

Par référence à la figure 8 des dessins en annexe, le circuit hydraulique alimentant ce groupe de débit est formé par un réservoir (16) surélevé et, placés en série, par une pompe (17) placée au-dessous du réservoir (16), une électrovalve (5) à trois voies, une soupape de retenue (25), un clapet de sûreté (26), une chaudière (6) à résistance électrique (18) et un thermostat (19) de contrôle: une électrovalve (8) asservie à une commande électrique, servant à permettre l'arrivée d'eau dans la tête (13) est placée sur le conduit (9) reliant la chaudière (6) et la tête de débit (13); une sortie de l'électrovalve (5) est raccordée à la tête (13) pour permettre d'amener en même temps de l'eau froide: de cette façon, lorsque l'on doit obtenir une boisson de solution, la cartouche (11) est traitée avec de l'eau moins chaude.

Par référence aux figures de 9 à 12 des dessins en annexe, une cartouche en plastique pour café express filtré, destinée au groupe de débit selon l'invention, est constituée par:
- une enveloppe tubulaire (110) avec le bord supérieur muni d'une bride (111)annulaire dépassant à l'extérieur et avec un diaphragme (112, transversal, médian, pluriperforé, servant à délimiter une chambre (113) supérieure, pour la couche de café moulu et tassé, et délimitant une chambre (114) inférieure devant contenir plusieurs cloisons (115) verticales, radiales, allant jusqu'à la paroi (110) et formant corps unique avec celle-ci (110) et le diaphragme (112);
- un couvercle (116) avec un diaphragme (117) pluriperforé d'où sort un collet inférieur (118) annulaire destiné à s'insérer, avec précision, dans l'orifice de l'enveloppe (110) susdite et avec une bride (119) annulaire, coplanaire au diaphragme (117) près du bord duquel une rainure (120) en réduit l'épaisseur afin d'en faciliter la déformation centrifuge, même lors d'un écrasement plutôt faible.

Par référence aux figures de 13 à 15 des dessins en annexe, une cartouche en plastique pour des boissons de solution, destinée à ce groupe de débit est constituée par:

- un corps cylindrique (210) creux, ayant un fond (212) et une bride (211) annulaire en face du bord supérieur: une petite fente (213) de sortie de la solution est ménagée au centre du fond (212);
- un couvercle (216) avec un diaphragme (217) plein, dont la partie inférieure est renforcée par plusieurs nervures (215) radiales dont une est munie de deux petits trous (214) passants, diamétralement opposés pour l'entrée de l'eau, et avec un collet (218) inférieur et une bride (219) identiques à ceux de la cartouche pour boissons de percolation.

Le fonctionnement du groupe de débit est le suivant: Avec le cylindre (7) au point mort, la cartouche (11) préconfectionnée pour la percolation est poussée sur le godet (15) sur lequel elle sera centré par les ressorts (18); successivement, on tourne la poignée (33) de façon à provoquer la montée du cylindre (7) tubant la cartouche et comprimant la bride (119) de la cartouche contre la tête (113) jusqu'à son écrasement. A ce stade, par l'électrovalve (8), l'eau chaude de la chaudière (6) arrive à la tête (13), par l'orifice (9) se répand sur la surface pluriperforée du couvercle de la cartouche située au-dessous, passe dans la cartouche avant d'effectuer la percolation; le café express obtenu sort du diaphragme de filtrage (112), est recueilli dans le godet (15) situé au-dessous avant d'être amené par le conduit (24) jusqu'au bec de distribution (14).

Dans le cas de cartouche pour solution, l'eau, chaude et froide, sortant de l'orifice (9) de la tête (13) arrive dans la cartouche en passant par les deux trous (214) du couvercle; la solution obtenue sort par le trou (213) du fond et passe donc directement dans le conduit (20) jusqu'au bec de distribution (14).

REVENDICATIONS

0087550

1. Groupe de débit pour distributeur de boissons chaudes à cartouches préconfectionnées à jeter, caractérisé en ce qu'il comprend:

- un bâti (4   ) avec une chambre (41) cylindrique, verticale, ouverte dans le haut;

- un cylindre (7) tubulaire, mobile verticalement dans la chambre (41) du bâti (4) et en en dépassant afin de pouvoir entièrement chemiser la cartouche (11) en cours de fonctionnement;

- un godet (15) fixé au bâti (4-11) dans le cylindre (7) pour supporter la cartouche (11) , recueillir la boisson obtenue et l'amener au bec de distribution (14);

- une tête (13) horizontale, fixe et située axialement au-dessus du godet (15) pour le débit de l'eau sous pression et réchauffée à deux températures différentes;

et en combinaison:

- une cartouche en plastique pour boissons de percolation, formée par une enveloppe tubulaire (110) avec un diaphragme (112) transversal, médian et pluriperforé et, par un couvercle (126) pluriperforé; et:

- une cartouche en plastique pour boissons de solution, formée par une enveloppe (210) cylindrique, avec le fond (212) muni d'une petite fente (213) centrale et passante et, par un couvercle (216) inférieur muni de plusieurs nervures (215) radiales, avec deux petits trous (214) passants et espacés.

2. Groupe de débit selon la revendication 1, caractérisé en ce que le fond (71) du cylindre (7) susdit est relié à une genouillère (3) comprenant une tige verticale (1) tournant horizontalement au moyen d'une poignée (33) de manoeuvre et dont la course angulaire, dans un sens ou dans l'autre, provoque respectivement, la montée ou la descente du cylindre (7) vers ou de la tête (13) de débit de l'eau.

3. Groupe de débit selon la revendication 1, caractérisé en ce que le cylindre (7) susdit est muni de deux brides (32) dépassant radialement vers l'extérieur, passant dans les boutonnières (31) correspondantes de la came (30) tubulaire placée sur le cylindre (7) , tournant horizontalement au moyen d'un levier (33) de manoeuvre et dont la course angulaire, dans un sens ou dans l'autre, provoque respectivement la montée ou la descente du cylindre (7) vers ou de la tête (13) de débit de l'eau.

4. Groupe de débit selon la revendication 1, caractérisé en ce que le cylindre (7) susdit a le bord supérieur (70) incliné vers l'intérieur.

5. Groupe de débit selon la revendication 1, caractérisé en ce que la surface active du godet (15) est plan-conique avec un canal (20) central, axialement perforé et supérieurement coplanaire à la zone périphérique plane, devant receuillir séparément la boisson obtenue avec une cartouche pour percolation ou pour solution.

6. Groupe de débit selon la revendication 1, caractérisé en ce que la tête (13) est munie d'un orifice (91) circulaire, s'étendant sur toute la zone perforée du couvercle de la cartouche de percolation et masquée par un élément (10) brise-jet.

7. Groupe de débit selon la revendication 1, caractérisé en ce que la tête (13) est alimentée par une électrovalve (8) et une pompe (17), uniquement en eau chaude provenant d'une chaudière (6) à la pression de dix atm., pour permettre la production d'une boisson de percolation.

8. Groupe de débit selon la revendication 1, caractérisé en ce que la tête (13) est en partie alimentée, au moyen de l'électrovalve (8) et de la pompe (17), en eau chaude provenant de la chaudière (6) et en partie, au moyen de l'électrovalve (5) et de la pompe (17), en eau froide provenant du réservoir (16) pour permettre la production d'une boisson de solution.

9. Groupe de débit selon la revendication 1, caractérisé en ce que la cartouche (11) pour les boissons de percolation ou de solution a le couvercle muni d'une bride (119-219) dans le côté supérieur de laquelle est tirée une rainure annulaire (120-220) permettant à la partie restante externe de la bride de produire, sous la compression effectuée par le bord libre (71) du cylindre (7), l'étanchéité avec la tête (13).

**Fig. 1**

**Fig. 2**

**Fig. 3**

**Fig. 4**

**Fig. 5**

0087550

Fig. 6

Fig. 7

0087550

**Fig. 8**

Fig. 9

Fig. 11

Fig. 10

Fig. 12

Fig. 13

Fig. 14

Fig. 15